# EUROPEAN PATENT SPECIFICATION

(11) **EP 2 595 564 B1**
(45) Date of publication and mention of the grant of the patent: **11.10.2017**
(21) Application number: 11735380.5
(22) Date of filing: 07.07.2011
(51) Int. Cl.: A61C 13/00, G06F 17/50

(54) **SURFACE MANIPULATION IN DENTAL PROSTHESIS DESIGN**
OBERFLÄCHENMANIPULATION BEIM ENTWURF VON ZAHNPROTHESEN
MANIPULATION DE SURFACE EN CONCEPTION DE PROTHÈSE DENTAIRE

(30) Priority: 23.07.2010 US 482108
(43) Date of publication of application: 29.05.2013
(73) Proprietor: Nobel Biocare Services AG, 8058 Zürich-Flughafen (CH)
(72) Inventor: LAJOIE DORVAL, Jean-Philippe, Quebec, QC G1M 3H9 (CA)
(74) Representative: Capré, Didier
(86) International application number: PCT/EP2011/003379
(87) International publication number: WO 2012/010259

(56) References cited:
- WO-A1-2007/084727
- US-A1- 2006 020 363
- US-A1- 2011 196 654

## Description

### BACKGROUND

### Field

The present application generally relates to dental planning, and more particularly to surface manipulation in dental prosthesis design.

### Description of related technology

The use of computer systems to design dental prostheses has increased in recent years. The computer systems allow a dentist, dental technician, or other operator to design dental prostheses for individual patients. These individual prosthesis designs are often called "situations," "dental plans," or "prosthetic plans." Operators using the computer systems can design plans based on a library of the teeth shapes and positions, patient data, and available equipment and hardware. US2006020363 and WO2007084727 disclose such computer systems and methods.

A problem with current systems is that they provide only limited ways to manipulate the surface of the dental prostheses that are being designed. These limited manipulations can make it difficult for an operator to add or subtract relatively uniform "layers" of material to / from the surface of a dental prosthesis that is being designed. Adding and subtracting uniform layers of material can be important when operators would like to thicken a portion of a crown or prosthesis for stability reasons and increase the thickness of a crown without significantly altering the contour, just to name a few examples. These problems and others are addressed by the techniques, systems, methods, devices, and computer-readable media described herein.

### SUMMARY

Presented herein are methods, systems, devices, and computer-readable media for surface manipulation in dental prosthesis design, as defined in claims 1, 14 and 18.

Embodiments herein include systems and methods for surface manipulation in dental prosthesis design. Embodiments include providing a computer-based interface for modifying a surface of a model of a dental prosthesis; receiving via the computer-based interface a set of areas where an operator would like to perform a limited manipulation of the surface of the model; and manipulating portions of the surface up to a limit associated with the limited manipulation of the surface based on the set of areas, irrespective of overlap in the areas received from the operator. Embodiments may also include receiving a first area in the set of areas and a second area in the set of areas, wherein the first area and the second area overlap in a particular, overlapping area; and manipulating portions of the surface associated with the particular, overlapping area only up to the limit associated with the limited manipulation, notwithstanding the overlap.

Numerous other embodiments are described throughout herein.

All of these embodiments are intended to be within the scope of the invention herein disclosed. These and other embodiments will become readily apparent to those skilled in the art from the following detailed description having reference to the attached figures, the invention not being limited to any particular disclosed embodiment(s).

### BRIEF DESCRIPTION OF THE DRAWINGS

**FIG. 1** illustrates a first interface for surface manipulation in dental prosthesis design.
**FIG. 2** illustrates an example system for surface manipulation in dental prosthesis design.
**FIG. 3A** and **3B** illustrate two example methods for surface manipulation in dental prosthesis design.
**FIG. 4** illustrates a second interface for surface manipulation in dental prosthesis design.
**FIG. 5** illustrates a third interface for surface manipulation in dental prosthesis design.
**FIG. 6** illustrates a fourth interface for surface manipulation in dental prosthesis design.
**FIG. 7** illustrates a fifth interface for surface manipulation in dental prosthesis design.
**FIG. 8** illustrates a first surface manipulation in dental prosthesis design.
**FIG. 9** illustrates a second surface manipulation in dental prosthesis design.
**FIG. 10** illustrates a third surface manipulation in dental prosthesis design.
**FIG. 11** illustrates a sixth interface for surface manipulation in dental prosthesis design.
**FIG. 12** illustrates a seventh interface for surface manipulation in dental prosthesis design.

### DETAILED DESCRIPTION OF SPECIFIC EMBODIMENTS

### Overview

Traditionally, when designing dental prostheses, operators, dentists, and dental practitioners manipulate the surfaces of the model of the dental prostheses they are designing. Manipulation options may be limited. For example, a system might allow an operator to select among a limited number of points on the surface, and to pull, push, or move those points in order to modify the surface itself. Even in hypothetical systems where the operator can manipulate more than a limited number of points, this type of manipulation would be awkward or cumbersome.

Another option might be to allow the operator to "spray" material onto the surface of the prosthesis. In doing so, the surface of the prosthesis would be modified based on the rate of spray and the amount of time of spray. Therefore, if an operator wanted to add a significant amount of material at one point, the operator can hold the spray at that one point, and the surface will continue to deform in the opposite direction of spray.

In any of these approaches for designing dental prostheses, it would be very difficult to add or cut away a layer to / from a dental prosthesis. Various methods, systems, techniques and computer-readable media described herein enable the operator to add relatively uniform layers to the surface of a prosthesis or to subtract relatively uniform layers from the surface of a prosthesis.

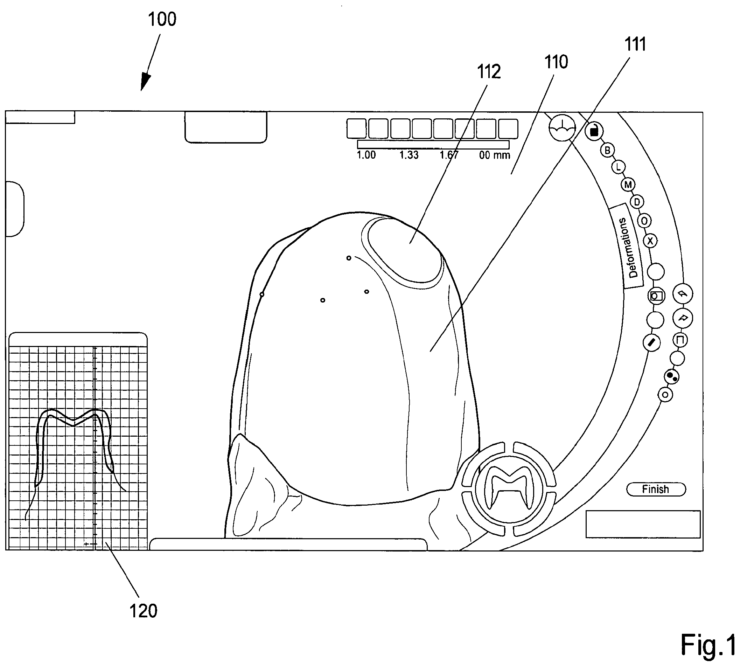

**FIG. 1** shows an example of an interface **100** that includes an overlaid representation portion **110,** as well as a cross-section portion **120.** The overlaid representation portion **110** shows the surface of a model **111,** that surface being a representation of the dental prosthesis being designed. Various embodiments described herein will allow an operator to manipulate a mouse, either 2D or 3D, a keyboard, or other input device, in order to add or subtract a uniform layer to the surface **111** of the dental prosthesis. The view of the surface as the model is being manipulated may be marked or colored **112** to show the position of where the mouse is manipulating or will manipulate the surface **111.**

In some embodiments, the user uses the input device in order to define a set of areas in which the uniform layer is to be added. These sets of areas can overlap without changing the uniformity of the layer being added or subtracted. This is in sharp contrast to the spray paint method in which any overlap will cause additional deposit of material on the surface. In various embodiments, the operator can indicate the start of a layer deposition using a mouse click, keystroke or other input, and begin to manipulate the mouse in order to define a line, set of points, set of areas, or other indication of where the layer should go. The areas defined by this input will be manipulated (e.g., a layer added or subtracted) up to a limit associated with the layer, regardless of the overlap among the areas.

An operator may want to add a uniform layer to the surface of a prosthesis in order to provide additional girth or width to the prosthesis without changing the general anatomic shape of the area being manipulated. Another reason that an operator may want to add a uniform layer is to provide a veneer on or thicken a cut-back restoration. The other previous manipulation methods will not necessarily provide as easy an interface for adding such a uniform layer.

The types of manipulation described herein may be used with full anatomic restorations, full contour restorations, and/or cut-back restorations. The model used as input to the system can be a scan of a dental wax up, can be a CAD model of a dental plan built up in a CAD design program, or can come from another source. Further, these manipulations may be used with any type of dental prosthesis design.

Additional embodiments and further description are provided below.

### Example system

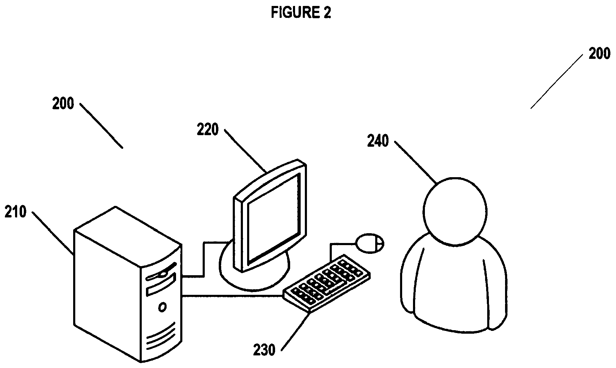

**FIG. 2** illustrates an example system **200** for surface manipulation in dental prosthesis design. The system **200** may include one or more computers **210** coupled to one or more displays **220,** and one or more input devices **230.** An operator **240,** who may be a dentist, dental technician, or other person, may plan dental prostheses using system **200** by manipulating the one or more input devices **230,** such as a keyboard and / or a mouse. In some embodiments, while working on the dental plan, the operator **240** may view the dental plan and other related dental plan data on the display **220.** The display **220** may include two or more display regions or portions, each of which displays a different view of the dental plan. For example, in some embodiments, the display **220** may show a semi-realistic 3D rendering of the dental plan, a localized abstraction of the dental plan, and / or a cross-sectional representation of the dental plan. Each of these displays or portions may be linked internally within a program and / or using data on computer **210.** For example, a program running on a computer **210** may have a single internal representation of the dental plan in memory and the internal representation may be displayed in two or more abstract or semi-realistic manners on display **220.**

In some embodiments, the operator **240** may be able to perform a command, such as select, move, manipulate, or make transparent, opaque, or invisible, on a particular substructure in the dental plan. The operator **240** may be able to perform this command by manipulating the input device **230,** such as clicking with a mouse on a particular region of one of the abstract or semi-realistic versions of the dental plan displayed on the display **220.**

In various embodiments, the computer **210** may include one or more processors, one or more memories, and one or more communication mechanisms. In some embodiments, more than one computer may be used to execute the modules, methods, blocks, and processes discussed herein. Additionally, the modules and processes herein may each run on one or multiple processors, on one or more computers; or the modules herein may run on dedicated hardware. The input devices **230** may include one or more keyboards (one-handed or two-handed), mice, touch screens, voice commands and associated hardware, gesture recognition, or any other means of providing communication between the operator **240** and the computer **210.** The display **220** may be a two-dimensional ("2D") or 3D display and may be based on any technology, such as LCD, CRT, plasma, projection, etc.

The communication among the various components of system **200** may be accomplished via any appropriate coupling, including USB, VGA cables, coaxial cables, FireWire, serial cables, parallel cables, SCSI cables, IDE cables, SATA cables, wireless based on 802.11 or Bluetooth, or any other wired or wireless connection(s). One or more of the components in system **200** may also be combined into a single unit or module. In some embodiments, all of the electronic components of system **200** are included in a single physical unit or module.

### Process for Surface Manipulation in Dental Prosthesis Design

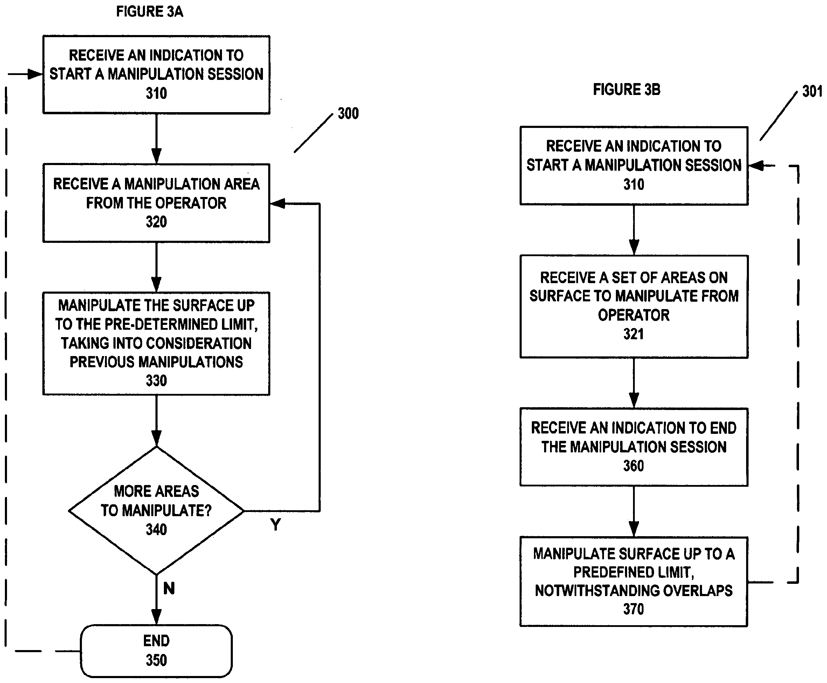

**FIG. 3A** and **3B** depict methods for surface manipulation in dental prosthesis design. In an example embodiment, an operator desiring to add a uniform layer to the model for a crown may move the cursor with the mouse over the crown, press the mouse button, and start moving the mouse around in order to define on what parts of the crown should have the uniform layer added. When the operator releases the mouse button, the addition of that uniform layer ends. No area on the crown has more than the predefined limit of layer added, regardless of how many times the operator may have dragged the cursor over the any particular area. In various embodiments, the edges of the area defined by the operator (the 'border band') may be tapered. Additionally, in some embodiments, an operator can similarly remove or 'slice off' a uniform layer. In some embodiments, the operator can see the uniform layer as it is being added (during the mouse movements). In other embodiments, the operator sees the addition of the uniform layer after the session has ended. Various other techniques, embodiments, and methods are described further herein.

Returning to **FIG. 3A****,** in block **310,** an indication is received to start a manipulation session. The indication may be a mouse click, a keystroke, a gesture with a 3D mouse, a verbal signal, or any other type of input. The operator, by indicating the start of a manipulation session, is indicating that the subsequent areas defined during the manipulation session will all be part of the same manipulation. The indication to start a manipulation session may signal, for example, the addition of a layer to the surface or the subtraction of a layer from the surface. For example, a left mouse click might indicate an addition to the surface, and a right mouse click might indicate the subtraction from a surface. Keystrokes may also be used to signal the addition or subtraction of a layer. For example, control-X might indicate a manipulation session that will subtract from the surface, and a control-V might indicate the start of a session to add a layer to the surface. As another example, a manipulation session may start when the left mouse button is first held down, and the manipulation session may continue until the left mouse button is released.

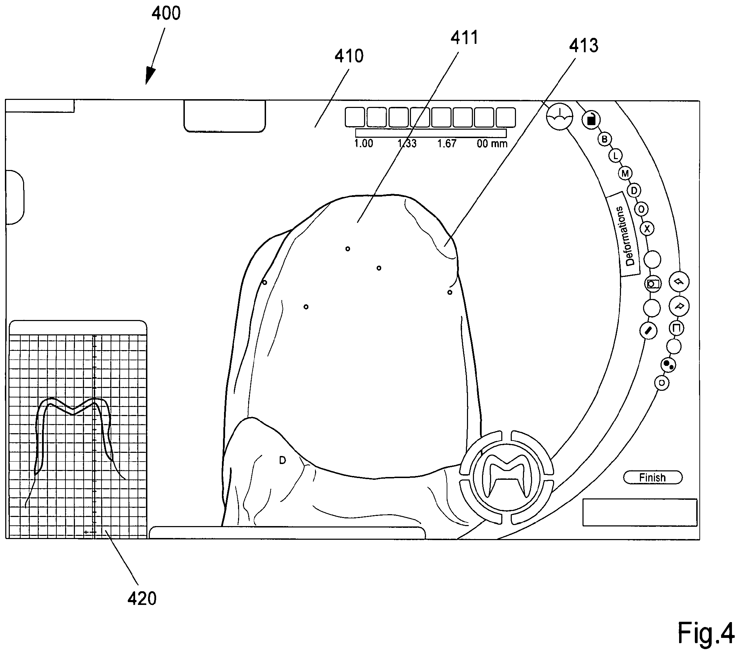

After an indication to start a manipulation session is received in block **310,** then in block **320,** a manipulation area is received from the operator. One way in which an operator can specify a manipulation area is by dragging a mouse cursor over the surface in an overlaid representation portion, such as overlaid representation portion **410** in **FIG. 4****.** The manipulation area specified by the operator in that case may be a single location with an associated radius or area that is to be manipulated. In some embodiments, the operator, may move the mouse over a surface, and then click a mouse button or press a keyboard key, in order to indicate an area to be manipulated. Block **320** may be performed numerous times to receive a set of manipulation areas, as depicted in **FIG. 3A****.**

Herein described are various 'areas' on a surface. The area on the surface may be defined by a location and a radius, that location being a point on the surface of the model. The multiple or sets of areas may be defined by a line from one point on the model to another point on the model, or a curve from one point on the model to another point on the model. In some embodiments, the area may not be circular, but may be an object with a spine that's associated with the line or the curve defined on the surface. In some embodiments, if the operator decides to remove the layer that has been added, the operator may hit a keystroke, provide a verbal signal that will 'undo' the last action.

After a manipulation area has been received from the operator in block **320,** then in block **330,** the surface is manipulated up to the predetermined limit, taking into consideration previous manipulations performed during this manipulation session. Therefore, if the area received in block **320** has already been manipulated up to the predetermined limit during this manipulation session, then the surface will not be manipulated any further. If a portion of the surface received from the operator in block **320** has already been manipulated, then the remaining portion of the surface may be manipulated up to the predetermined limit in block **330.** As such, consider an operator that is indicating areas to be manipulated by dragging a mouse across the surface by, for example, while holding down a mouse button. Due to the cohesive nature of the path that the mouse will be dragged, the areas to be manipulated that are received in block **320** may overlap, either partially or substantially, and therefore, each subsequent manipulated area may cause only a small portion of the surface to be manipulated (because much of any current area will have been manipulated in previous iterations of block **330**).

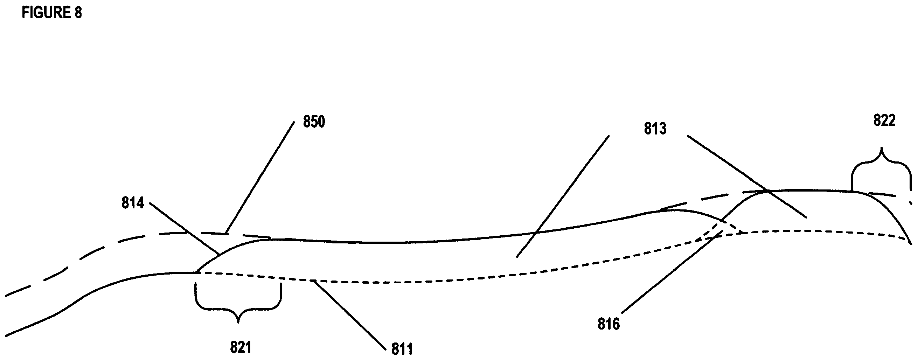

In some embodiments, the area to be manipulated may have a tapered edge. This is depicted in **FIG. 8****.** The area to be manipulated, **813,** may have a tapered edge **814.** Therefore, part of the area to be manipulated, **813,** will be manipulated up to the manipulation limit **850** above the original surface **811.** As depicted in **FIG. 8****,** the tapered edge **814** may go from the manipulation limit **850** down to the original surface **811.**

In certain embodiments, if there is an overlap of the tapered edge, such as depicted by overlapped tapered edge **816,** then the amount that the original surface **811** is manipulated may be a function of the amount that each of the tapered edges would have manipulated the surface at that point. This function may be additive, thereby adding to the surface, up to the manipulation limit **850,** based on the overlap depicted at **816.** In some embodiments, the amount to manipulate the surface at an overlapped tapered edge **816** may be the maximum that either of the tapered edges would have individually manipulated the surface. Therefore, in some embodiments, if at a particular point along the surface **811,** one tapered edge would have manipulated the surface by 80% of the manipulation **850,** and the other would have manipulated the surface by 70% of the manipulation limit **850,** then the amount that the surface will be manipulated would remain 80% of the manipulation limit **850.**

The tapered edges of an area to be manipulated may be defined by a 'border band,' depicted in **FIG. 8** as **821** and **822.** The border band **821** and **822** may be a small area encircling the area to be manipulated, or it may be a band at the edge of the area to be manipulated. The amount that the surface is manipulated over that border band **821** and **822** may be tapered, as a straight line, as a curve (as depicted in **FIG. 8**), as a sinusoid, or in any appropriate manner. Points beyond the border band may be manipulated by zero, or in other words, may not be manipulated at all, and the surface would remain at the same level.

Returning again to **FIG. 3A****,** the determination, in block **340,** whether there are more areas to manipulate may include receiving a mouse click, mouse gesture, 3D mouse gesture, keyboard stroke, etc., or any other signal indicating that the manipulation session should end. If that signal has not been received, then the process may return to block **320** to receive another manipulation area from the operator. If there are no more areas to manipulate, as determined in block **340,** then in block **350,** the manipulation session is terminated. Optionally, the process may include waiting for or otherwise receiving another indication to start another new manipulation session in block **310,** and the process **300** may begin over again.

The blocks in process **300** may be performed in any order, and additional blocks may be added. Further, certain blocks may be consolidated or omitted altogether. For example, in **FIG. 3B****,** a process **301** for surface manipulation in dental prosthesis design is shown. As was the case in process **300,** process **301** begins by receiving an indication to start a manipulation session. After that indication is received, a set of areas on the surface to manipulate are received. This set of areas may be received from an operator, and may be received in any of the manners described with respect to process **300,** including an operator dragging a mouse to indicate areas, or any other manner. The manipulations associated with these received areas to manipulate may be displayed to the operator immediately, or may be displayed after a certain period of time, or may be displayed after the manipulation session has ended.

The sets of areas to be manipulated are received in block **321** until an indication to end the manipulation session has been received in block **360.** This indication to end the manipulation session may take any of the forms described with respect to process **300.** In block **370,** the surface is manipulated up to a predefined limit, notwithstanding any overlaps. The amount to which to manipulate the surface may be determined by looking at all of the areas for which manipulation is desired, and for those areas, manipulating the surface up to the predefined limit. In this way, the process can wait until an entire session's worth of areas are received from the operator before determining the overlap and the surface manipulation.

As another example, in some embodiments, a manipulation session may be started by pressing a key stroke (e.g., block **310**), then areas to manipulate may be indicated by successive clicks of a mouse button (e.g., block **320** or **321**), and another keystroke may signal the end of the manipulation session (e.g., block **340** or **360**). In some embodiments, the start of a manipulation session may be signaled by a left mouse click (e.g., block **310**) and the areas to manipulate may be selected with a right mouse click (e.g., block **320** or **321) -** and a subsequent left mouse click may signal the end of the manipulation session (e.g., block **340** or **360**).

### Examples Interfaces for Surface Manipulation in Dental Prosthesis Design

**FIG. 4** shows an interface **400** that includes an overlay representation portion **410** and a cross-section portion **420.** The overlay representation portion **410** shows the surface **411,** as well as a previously manipulated portion of the surface **413.**

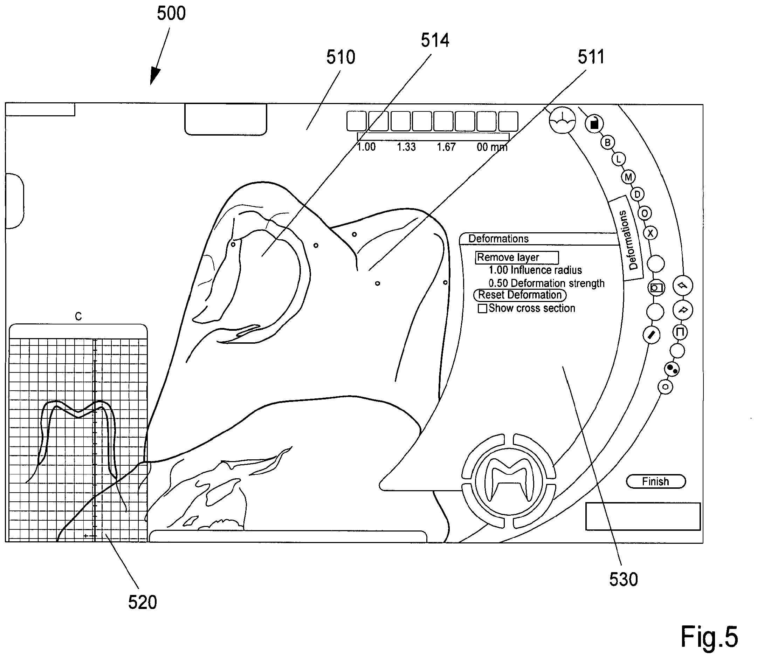

**FIG. 5** shows another interface **500** for surface manipulation in dental prosthesis design. The interface **500** includes an overlaid representation portion **510,** a cross-section portion **520,** and a manipulation menu **530.** In some embodiments, the manipulation menu **530** may be visible at all times to the operator. In other embodiments, the manipulation menu may be hidden or partially hidden on the interface **500,** and may be pulled out, clicked on or otherwise opened, for example, with a keystroke, before it is shown. For example, the manipulation menu **530** may be opened as a drop-down box or by performing a shortcut key. The manipulation menu may include a counter, textbox, or other manner of changing the manipulation limit associated with subsequent layers. That is, the manipulation menu **530** may allow the operator to change the thickness of a layer (e.g., the 'deformation strength' of the manipulation) to be added or subtracted from the surface **511.** The thickness of the manipulation layer to be added or subtracted from the surface **511** may be changed in numerous ways, including holding down a keyboard key, such as the control key, and manipulating the mouse or the mouse wheel. The manipulation menu may also have a radius or area of influence portion that will allow the operator to define how wide the areas to be manipulated should be defined. The radius (e.g., the 'influence radius') of the manipulation areas for the surface **511** may also be changed in myriad ways, including holding down a keyboard key, such as the shift key, and manipulating the mouse or the mouse wheel.

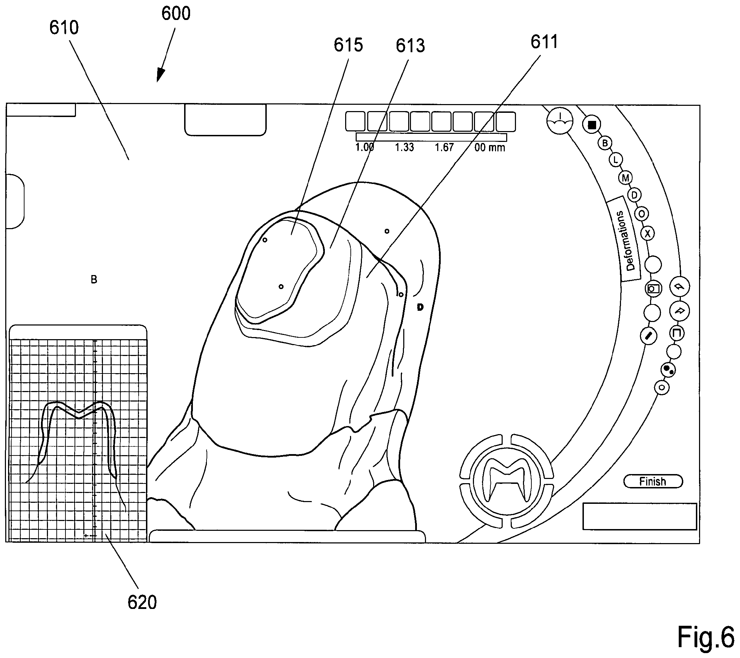

**FIG. 6** shows another example of an interface for surface manipulation in dental prosthesis design. Interface **600** includes an overlaid representation portion **610** and a cross-section portion **620.** The surface **611** is shown in the overlaid representation portion **610.** On the surface **611** is a previously manipulated portion of the surface **613** and visible in darker color is a currently manipulated portion of the surface **615.** The previously manipulated portion of the surface **613** is associated with its own (now-closed) manipulation session. Subsequent to that manipulation session, the layer added during that manipulation session is considered part of the underlying surface (e.g., surface **611**). Therefore, when the next manipulation session starts, the second manipulation portion **615** may be added on top of the previously manipulated portion, thereby adding two layers to what had been the underlying surface **611.**

Turning to the cross-section portion **620,** the cross-section portion may show the cross-section of the surface, as well as underlying structures, such as coping or supporting teeth. The cross-section portion may allow an operator to look at the thickness of a crown or other structure being added to the dental prosthesis design. Certain dental prosthesis designs require thicknesses based on material, required strength, or other parameters. The cross-section portion may allow the operator to quickly view the thickness and therefore know to what portions of the surface **611** to add layers.

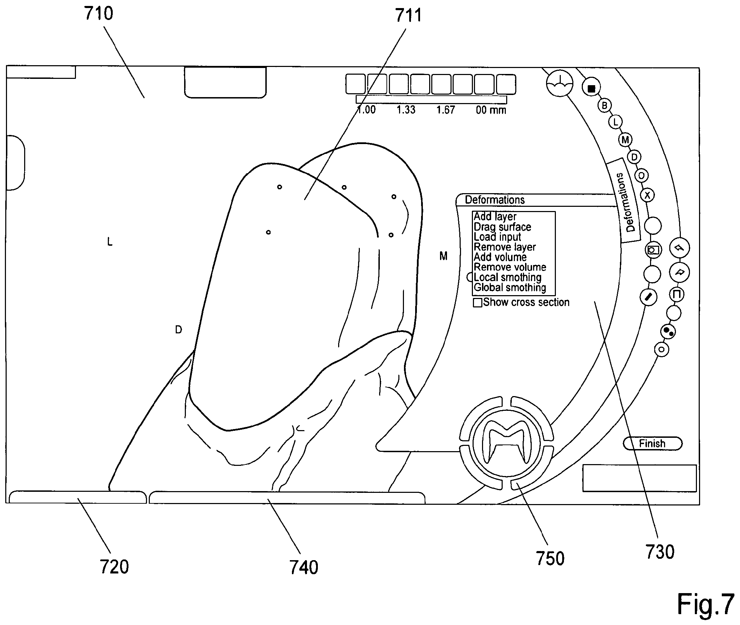

**FIG. 7** illustrates an interface **700** for surface manipulation in dental prosthesis design. **FIG. 7** illustrates that the interface **700** for dental prosthesis design may include more windows than described in some of the previous interfaces. For example, interface **700** may include an overlaid representation portion **710** displaying the surface **711** of the dental prosthesis. The interface may also include a tab for cross-section portion **720,** a tab for a localized abstraction portion **740,** a globalized abstraction portion **750,** and/or a manipulation menu portion **730**.

Numerous examples of other interfaces and options for additions of portions of an interface are described in U.S. Pat. Appl. No. 12/703,601, filed February 10, 2010, entitled Dental Prosthetics Manipulation, Selection, and Planning, which is hereby incorporated by reference in its entirety for all purposes.

### Surface Manipulations in Dental Prosthesis Deign

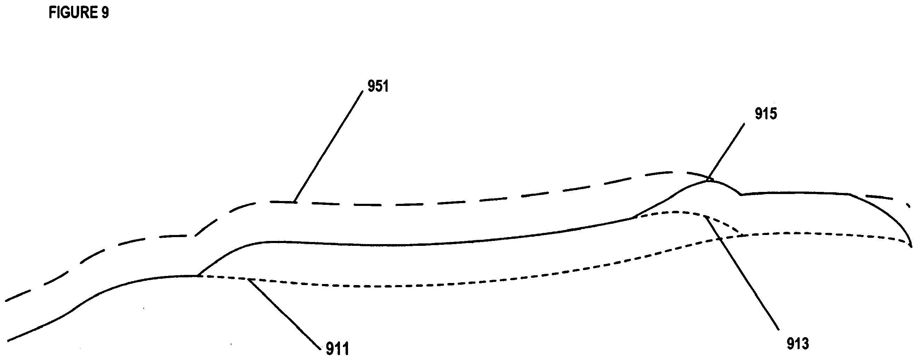

**FIGS. 8-10** illustrate examples of manipulating surfaces of dental prostheses. Various examples and embodiments with respect to **FIG. 8** have been described elsewhere herein. **FIG. 9** shows the second manipulation of a surface **915** being made after a previously manipulated surface **913** has been added to an original surface **911.** As illustrated in **FIG. 9****,** after the previously manipulated surface **913** has been added and the manipulation session associated with that manipulation has been completed, that previously manipulated surface **913** is now considered part of the surface, and the new manipulation limit **951** is extended above that previously manipulated surface **913.** Therefore, the new manipulation surface **951** tracks accordingly with the previously manipulated surface **913,** and not with the original surface **911.** When a new manipulation is started, a second manipulation of the surface **915** can be added, and that second manipulation of the surface **915** will add to the surface in the manner described elsewhere herein, up to the new manipulation limit **951.**

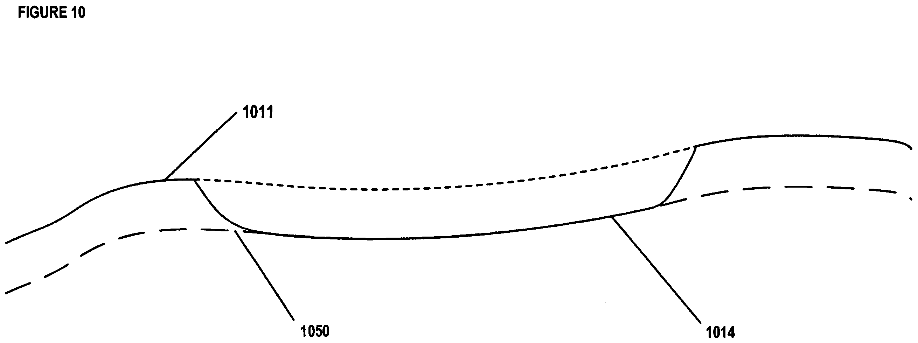

**FIG. 10** illustrates subtraction from, dissection of, or indention into a surface **1011.** An original surface **1011** may have portions of that surface indented, taken away, or otherwise manipulated. As with addition to a surface, subtraction from a surface is also associated with a manipulation limit **1050.** The operator can provide, using various techniques and embodiments herein, an area to manipulate the surface **1014.** Thereafter, the original surface **1011** has the surface subtracted, and the result is a new surface. Subtractions from a surface, such as that depicted in **FIG. 10****,** may be used in conjunction with other subtractions from a surface or other additions to a surface, allowing an operator to variously add and subtract from portions of the surface in order to achieve a desired result.

### Other Embodiments

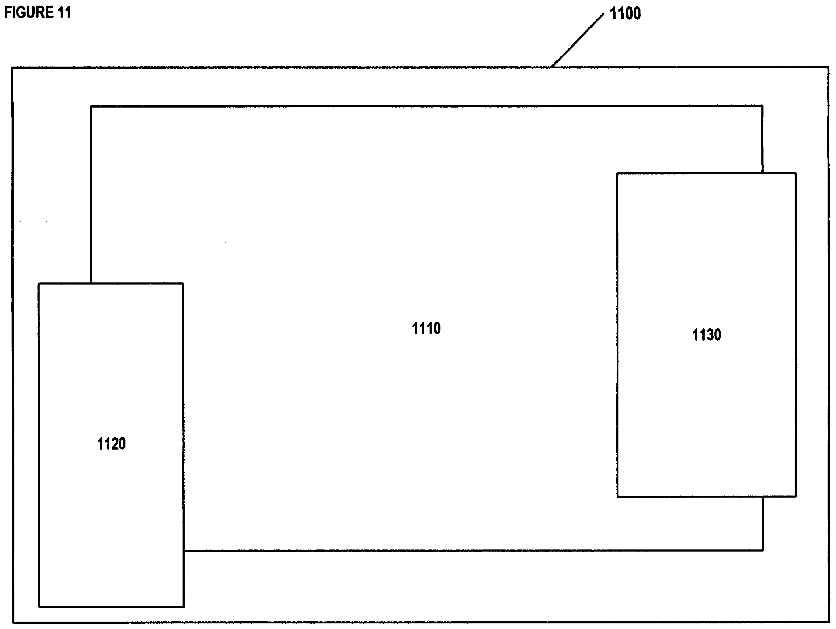

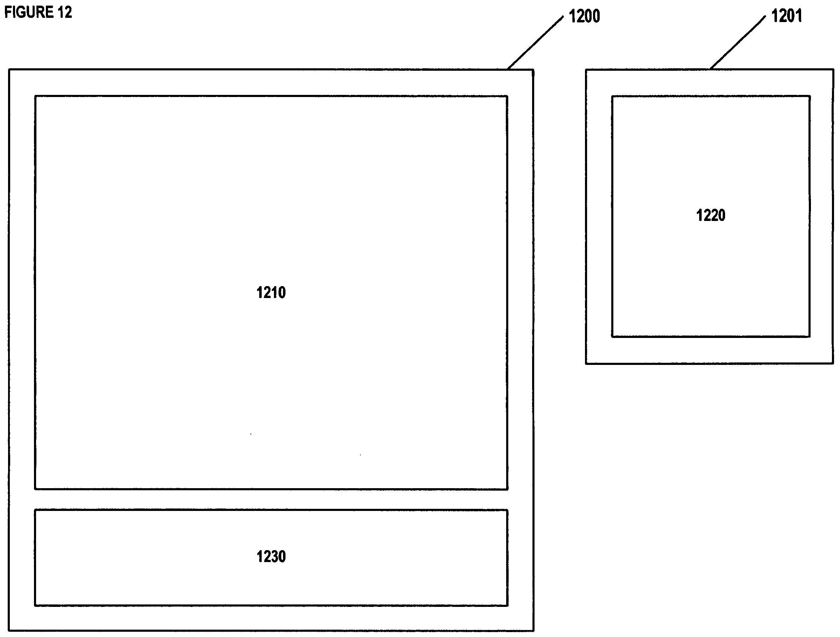

**FIGS. 11** and **12** illustrate example interfaces for surface manipulation in dental prosthesis design. **FIG. 11** illustrates a single interface **1100** that includes a cross-section portion **1120,** an overlaid representation portion **1110,** and a manipulation menu portion **1130.** As illustrated in **FIG. 12****,** the portions of an interface may be displayed on multiple displays, in multiple windows, and / or as part of separate interfaces. **FIG. 12** illustrates that an interface may be split into two interfaces **1200** and **1201,** with some of the portions being displayed on **1200** and some of the portions being displayed on **1201.** For example, interface **1200** may include the overlaid representation portion **1210** and the manipulation portion **1230,** while the interface **1201** may include the cross-sectional portion **1220.** The interfaces may be displayed on multiple monitors or on a single monitor using a single computer or multiple computers.

The processes and systems described herein may be performed on or encompass various types of hardware, such as computer systems. In some embodiments, computer **210,** display **220,** and / or input device **230** may each be separate computer systems, applications, or processes or may run as part of the same computer systems, applications, or processes - or one of more may be combined to run as part of one application or process - and / or each or one or more may be part of or run on a computer system. A computer system may include a bus or other communication mechanism for communicating information, and a processor coupled with the bus for processing information. The computer systems may have a main memory, such as a random access memory or other dynamic storage device, coupled to the bus. The main memory may be used to store instructions and temporary variables. The computer systems may also include a read-only memory or other static storage device coupled to the bus for storing static information and instructions. The computer systems may also be coupled to a display, such as a CRT or LCD monitor. Input devices may also be coupled to the computer system. These input devices may include a mouse, a trackball, or cursor direction keys.

Each computer system may be implemented using one or more physical computers or computer systems or portions thereof. The instructions executed by the computer system may also be read in from a computer-readable medium. The computer-readable medium may be a CD, DVD, optical or magnetic disk, laserdisc, carrier wave, or any other medium that is readable by the computer system. In some embodiments, hardwired circuitry may be used in place of or in combination with software instructions executed by the processor. Communication among modules, systems, devices, and elements may be over a direct or switched connections, and wired or wireless networks or connections, via directly connected wires, or any other appropriate communication mechanism. The communication among modules, systems, devices, and elements may include handshaking, notifications, coordination, encapsulation, encryption, headers, such as routing or error detecting headers, or any other appropriate communication protocol or attribute. Communication may also messages related to HTTP, HTTPS, FTP, TCP, IP, ebMS OASIS/ebXML, secure sockets, VPN, encrypted or unencrypted pipes, MIME, SMTP, MIME Multipart/Related Content-type, SQL, etc.

Any appropriate 3D graphics processing may be used for displaying or rendering including processing based on OpenGL, Direct3D, Java 3D, etc. Whole, partial, or modified 3D graphics packages may also be used, such packages including 3DS Max, SolidWorks, Maya, Form Z, Cybermotion 3D, or any others. In some embodiments, various parts of the needed rendering may occur on traditional or specialized graphics hardware. The rendering may also occur on the general CPU, on programmable hardware, on a separate processor, be distributed over multiple processors, over multiple dedicated graphics cards, or using any other appropriate combination of hardware or technique.

## Claims

1. A computer-implemented method for surface manipulation in dental prosthesis design, comprising:
providing a computer-based interface for modifying a surface of a model of a dental prosthesis;
receiving via the computer-based interface a set of areas where an operator would like to perform a limited manipulation of the surface of the model; and
manipulating portions of the surface up to a limit associated with the limited manipulation of the surface based on the set of areas, irrespective of overlap in the areas received from the operator;
wherein manipulating portions of the surface comprises manipulating portions of the surface using one or more computer processors.

2. The method of Claim 1,
wherein receiving the set of areas comprises receiving a first area in the set of areas and a second area in the set of areas, wherein the first area and the second area overlap in a particular, overlapping area; and
wherein manipulating portions of the surface comprises manipulating a portion of the surface associated with the particular, overlapping area only up to the limit associated with the limited manipulation.

3. The method of Claim 1, wherein a border band is associated with the edges of the areas in the set of areas and wherein manipulating portions of the surface comprises manipulating portions of the surface less than the limit associated with the limited manipulation at the border band.

4. The method of Claim 3, wherein manipulating portions of the surface comprises tapering the manipulation of the border band to zero at the edge of the border band that is away from the associated area in the set of areas.

5. The method of Claim 1, wherein manipulating a particular portion of the surface comprises:
determining a first manipulation amount based on a first area in the set of areas; and
determining a second manipulation amount based on a second area in the set of areas.

6. The method of Claim 5, wherein manipulating the particular portion of the surface comprises manipulating the particular portion of the surface by an amount determined based on a maximum of the first manipulation amount and the second manipulation amount.

7. The method of Claim 5, wherein manipulating the particular portion of the surface comprises manipulating the particular portion of the surface by an amount determined based on a function of the first manipulation amount and the second manipulation amount.

8. The method of Claim 1, wherein receiving the set of areas comprises receiving areas on the surface of the model.

9. The method of Claim 1, wherein receiving the set of areas comprises receiving mouse movements made by the operator.

10. The method of Claim 1, wherein receiving the set of areas comprises receiving one or more keystroke.

11. The method of Claim 1, wherein the method further comprises receiving a limit associated with a limited manipulation on the surface from the operator.

12. The method of Claim 1, wherein receiving the set of areas comprises receiving a set of locations and associating an area with each location.

13. The method of Claim 12, wherein the method further comprises receiving a size of areas to associate with each location in the set of locations.

14. A system for surface manipulation in dental prosthesis design, comprising:
one or more computer processors configured to:
provide a computer-based interface for modifying a surface of a model of a dental prosthesis;
receive via the computer-based interface a set of areas where an operator would like to perform a limited manipulation of the surface of the model; and
manipulate portions of the surface up to a limit associated with the limited manipulation of the surface based on the set of areas, irrespective of overlap in the areas received from the operator.

15. The system of Claim 14,
wherein receiving the set of areas comprises receiving a first area in the set of areas and a second area in the set of areas, wherein the first area and the second area overlap in a particular, overlapping area; and
wherein manipulating portions of the surface comprises manipulating a portion of the surface associated with the particular, overlapping area only up to the limit associated with the limited manipulation.

16. The system of Claim 14, wherein a border band is associated with the edges of the areas in the set of areas and wherein manipulating portions of the surface comprises manipulating portions of the surface less than the limit associated with the limited manipulation at the border band.

17. The system of Claim 14, wherein receiving the set of areas comprises receiving areas on the surface of the model.

18. A computer-readable storage medium comprising computer-executable instructions for performing a method of surface manipulation in dental prosthesis design, the method comprising:
providing a computer-based interface for modifying a surface of a model of a dental prosthesis;
receiving via the computer-based interface a set of areas where an operator would like to perform a limited manipulation of the surface of the model; and
manipulating portions of the surface up to a limit associated with the limited manipulation of the surface based on the set of areas, irrespective of overlap in the areas received from the operator.

19. The computer-readable storage medium of Claim 18,
wherein receiving the set of areas comprises receiving a first area in the set of areas and a second area in the set of areas, wherein the first area and the second area overlap in a particular, overlapping area; and
wherein manipulating portions of the surface comprises manipulating a portion of the surface associated with the particular, overlapping area only up to the limit associated with the limited manipulation.

20. The computer-readable storage medium of Claim 18, wherein a border band is associated with the edges of the areas in the set of areas and wherein manipulating portions of the surface comprises manipulating portions of the surface less than the limit associated with the limited manipulation at the border band.

21. The computer-readable storage medium of Claim 18, wherein receiving the set of areas comprises receiving areas on the surface of the model.

22. The method of Claim 1, wherein a uniform layer is to be added or subtracted in said set of areas, whereby said sets of areas can overlap without changing the uniformity of the layer being added or subtracted.

23. The system of Claim 14, wherein a uniform layer is to be added or subtracted in said set of areas, whereby said sets of areas can overlap without changing the uniformity of the layer being added or subtracted.

24. The computer-readable storage medium of Claim 18, wherein a uniform layer is to be added or subtracted in said set of areas, whereby said sets of areas can overlap without changing the uniformity of the layer being added or subtracted.

## Patentansprüche

1. Computerimplementiertes Verfahren zur Oberflächenmanipulation beim Entwurf von Zahnprothesen, umfassend:
Bereitstellen einer computerbasierten Schnittstelle zum Modifizieren einer Oberfläche eines Modells einer Zahnprothese;
Empfangen einer Reihe von Bereichen, an denen ein Bediener eine begrenzte Manipulation der Oberfläche des Modells durchführen möchte, über die computerbasierte Schnittstelle; und
Manipulieren von Teilen der Oberfläche bis zu einer Grenze, die mit der begrenzten Manipulation der Oberfläche auf Grundlage der Reihe von Bereichen assoziiert ist, unabhängig von einer Überlappung der vom Bediener empfangenen Bereiche;
wobei Manipulieren von Teilen der Oberfläche Manipulieren von Teilen der Oberfläche unter Verwendung eines oder mehrerer Computerprozessoren umfasst.

2. Verfahren nach Anspruch 1,
wobei Empfangen der Reihe von Bereichen Empfangen eines ersten Bereichs in der Reihe von Bereichen und eines zweiten Bereichs in der Reihe von Bereichen umfasst, wobei sich der erste Bereich und der zweite Bereich in einem bestimmten Überlappungsbereich überlappen; und
wobei Manipulieren von Teilen der Oberfläche Manipulieren eines Teils der Oberfläche, der mit dem bestimmten Überlappungsbereich assoziiert ist, nur bis zu der Grenze umfasst, die mit der begrenzten Manipulation assoziiert ist.

3. Verfahren nach Anspruch 1, wobei ein Randstreifen mit den Rändern der Bereiche in der Reihe von Bereichen assoziiert ist und wobei Manipulieren von Teilen der Oberfläche Manipulieren von Teilen der Oberfläche innerhalb der Grenze umfasst, die mit der begrenzten Manipulation an dem Randstreifen assoziiert ist.

4. Verfahren nach Anspruch 3, wobei Manipulieren von Teilen der Oberfläche Verjüngen der Manipulation des Randstreifens auf Null am Rand des Randstreifens umfasst, der von dem assoziierten Bereich in der Reihe von Bereichen entfernt ist.

5. Verfahren nach Anspruch 1, wobei Manipulieren eines bestimmten Teils der Oberfläche Folgendes umfasst:
Bestimmen einer ersten Manipulationsmenge auf Grundlage eines ersten Bereichs in der Reihe von Bereichen; und
Bestimmen einer zweiten Manipulationsmenge auf Grundlage eines zweiten Bereichs in der Reihe von Bereichen.

6. Verfahren nach Anspruch 5, wobei Manipulieren des bestimmten Teils der Oberfläche Manipulieren des bestimmten Teils der Oberfläche um eine Menge umfasst, die auf Grundlage eines Maximums der ersten Manipulationsmenge und der zweiten Manipulationsmenge bestimmt ist.

7. Verfahren nach Anspruch 5, wobei Manipulieren des bestimmten Teils der Oberfläche Manipulieren des bestimmten Teils der Oberfläche um eine Menge umfasst, die auf Grundlage einer Funktion der ersten Manipulationsmenge und der zweiten Manipulationsmenge bestimmt ist.

8. Verfahren nach Anspruch 1, wobei Empfangen der Reihe von Bereichen Empfangen von Bereichen auf der Oberfläche des Modells umfasst.

9. Verfahren nach Anspruch 1, wobei Empfangen der Reihe von Bereichen Empfangen von Mausbewegungen umfasst, die von dem Bediener ausgeführt werden.

10. Verfahren nach Anspruch 1, wobei Empfangen der Reihe von Bereichen Empfangen eines oder mehrerer Tastenanschläge umfasst.

11. Verfahren nach Anspruch 1, wobei das Verfahren ferner Empfangen einer Grenze von dem Bediener umfasst, die mit einer begrenzten Manipulation auf der Oberfläche assoziiert ist.

12. Verfahren nach Anspruch 1, wobei Empfangen der Reihe von Bereichen Empfangen einer Reihe von Stellen und Assoziieren eines Bereichs mit jeder Stelle umfasst.

13. Verfahren nach Anspruch 12, wobei das Verfahren ferner Empfangen einer Größe von Bereichen umfasst, die mit jeder Stelle in der Reihe von Stellen assoziiert werden soll.

14. System zur Oberflächenmanipulation beim Entwurf von Zahnprothesen, umfassend:
einen oder mehrere Computerprozessoren, die zu Folgendem konfiguriert sind:
Bereitstellen einer computerbasierten Schnittstelle zum Modifizieren einer Oberfläche eines Modells einer Zahnprothese;
Empfangen einer Reihe von Bereichen, an denen ein Bediener eine begrenzte Manipulation der Oberfläche des Modells durchführen möchte, über die computerbasierte Schnittstelle; und
Manipulieren von Teilen der Oberfläche bis zu einer Grenze, die mit der begrenzten Manipulation der Oberfläche auf Grundlage der Reihe von Bereichen assoziiert ist, unabhängig von einer Überlappung der vom Bediener empfangenen Bereiche.

15. Verfahren nach Anspruch 14,
wobei Empfangen der Reihe von Bereichen Empfangen eines ersten Bereichs in der Reihe von Bereichen und eines zweiten Bereichs in der Reihe von Bereichen umfasst, wobei sich der erste Bereich und der zweite Bereich in einem bestimmten Überlappungsbereich überlappen; und
wobei Manipulieren von Teilen der Oberfläche Manipulieren eines Teils der Oberfläche, der mit dem bestimmten Überlappungsbereich assoziiert ist, nur bis zu der Grenze umfasst, die mit der begrenzten Manipulation assoziiert ist.

16. System nach Anspruch 14, wobei ein Randstreifen mit den Rändern der Bereiche in der Reihe von Bereichen assoziiert ist und wobei Manipulieren von Teilen der Oberfläche Manipulieren von Teilen der Oberfläche innerhalb der Grenze umfasst, die mit der begrenzten Manipulation an dem Randstreifen assoziiert ist.

17. System nach Anspruch 14, wobei Empfangen der Reihe von Bereichen Empfangen von Bereichen auf der Oberfläche des Modells umfasst.

18. Computerlesbares Speichermedium, das computerausführbare Anweisungen zum Durchführen eines Verfahrens zur Oberflächenmanipulation beim Entwurf von Zahnprothesen umfasst,
wobei das Verfahren Folgendes umfasst:
Bereitstellen einer computerbasierten Schnittstelle zum Modifizieren einer Oberfläche eines Modells einer Zahnprothese;
Empfangen einer Reihe von Bereichen, in denen ein Bediener eine begrenzte Manipulation der Oberfläche des Modells durchführen möchte, über die computerbasierte Schnittstelle; und
Manipulieren von Teilen der Oberfläche bis zu einer Grenze, die mit der begrenzten Manipulation der Oberfläche auf Grundlage der Reihe von Bereichen assoziiert ist, unabhängig von einer Überlappung der vom Bediener empfangenen Bereiche.

19. Computerlesbares Speichermedium nach Anspruch 18,
wobei Empfangen der Reihe von Bereichen Empfangen eines ersten Bereichs in der Reihe von Bereichen und eines zweiten Bereichs in der Reihe von Bereichen umfasst, wobei sich der erste Bereich und der zweite Bereich in einem bestimmten Überlappungsbereich überlappen; und
wobei Manipulieren von Teilen der Oberfläche Manipulieren eines Teils der Oberfläche, der mit dem bestimmten Überlappungsbereich assoziiert ist, nur bis zu der Grenze umfasst, die mit der begrenzten Manipulation assoziiert ist.

20. Computerlesbares Speichermedium nach Anspruch 18, wobei ein Randstreifen mit den Rändern der Bereiche in der Reihe von Bereichen assoziiert ist und wobei Manipulieren von Teilen der Oberfläche Manipulieren von Teilen der Oberfläche innerhalb der Grenze umfasst, die mit der begrenzten Manipulation an dem Randstreifen assoziiert ist.

21. Computerlesbares Speichermedium nach Anspruch 18, wobei Empfangen der Reihe von Bereichen Empfangen von Bereichen auf der Oberfläche des Modells umfasst.

22. Verfahren nach Anspruch 1, wobei eine einheitliche Schicht in der Reihe von Bereichen hinzugefügt oder weggenommen werden soll, wobei sich die Reihen von Bereichen überlappen können, ohne die Einheitlichkeit der Schicht zu verändern, die hinzugefügt oder weggenommen wird.

23. System nach Anspruch 14, wobei eine einheitliche Schicht in der Reihe von Bereichen hinzugefügt oder weggenommen werden soll, wobei sich die Reihen von Bereichen überlappen können, ohne die Einheitlichkeit der Schicht zu verändern, die hinzugefügt oder weggenommen wird.

24. Computerlesbares Speichermedium nach Anspruch 18, wobei eine einheitliche Schicht in der Reihe von Bereichen hinzugefügt oder weggenommen werden soll, wobei sich die Reihen von Bereichen überlappen können, ohne die Einheitlichkeit der Schicht zu verändern, die hinzugefügt oder weggenommen wird.

## Revendications

1. Procédé implémenté par ordinateur pour une manipulation de surface dans un modèle de prothèse dentaire, comprenant :
L'utilisation d'une interface informatique pour modifier une surface de modèle d'une prothèse dentaire ;
la réception à travers l'interface informatique d'un jeu de zones dans lesquelles l'opérateur voudrait réaliser une manipulation limitée de la surface du modèle ; et
la manipulation des parties de la surface jusqu'à une limite associée à la manipulation limitée de la surface basée sur le jeu de zones, indépendamment du chevauchement dans les zones provenant de l'opérateur ;
dans lequel les parties de manipulation de la surface comprennent des parties de manipulation de la surface utilisant un ou plusieurs processeurs informatiques.

2. Procédé de la revendication 1,
dans lequel la réception du jeu de zones comprend la réception d'une première zone dans le jeu de zones est d'une seconde zone dans le jeu de zones, dans lequel la première zone et la seconde zone se chevauchent au niveau d'une zone de chevauchement donnée ; et
dans lequel les parties de manipulation de la surface comprennent la manipulation d'une partie de la surface associée à la zone de chevauchement donnée seulement jusqu'à une limite associée à la manipulation limitée.

3. Procédé de la revendication 1, dans lequel une bande limite est associée aux bords des zones dans le jeu de zones et dans lequel les parties de manipulation de la surface comprennent des parties de manipulation de la surface inférieures à la limite associée à la manipulation limitée au niveau de la bande limite.

4. Procédé de la revendication 3, dans lequel les parties de manipulation de la surface comprennent le rétrécissement de la manipulation de la bande limite à zéro au niveau du bord de la bande limite qui est éloignée de la zone associée dans le jeu de zones.

5. Procédé de la revendication 1, dans lequel la manipulation d'une partie donnée de la surface comprend :
la détermination d'une première quantité de manipulation basée sur une première zone dans le jeu de zones ; et
la détermination d'une seconde quantité de manipulation basée sur une seconde zone dans le jeu de zones.

6. Procédé de la revendication 5, dans lequel la manipulation de la partie donnée de la surface comprend la manipulation de la partie donnée de la surface par une quantité déterminée en se basant sur un maximum de la première quantité de manipulation et de la seconde quantité de manipulation.

7. Procédé de la revendication 5, dans lequel la manipulation de la partie donnée de la surface comprend la manipulation de la partie donnée de la surface par une quantité déterminée sur une fonction de la première quantité de manipulation et de la seconde quantité de manipulation.

8. Procédé de la revendication 1, dans lequel la réception du jeu de zones comprend la réception des zones sur la surface du modèle.

9. Procédé de la revendication 1, dans lequel la réception du jeu de zones comprend la réception des mouvements de souris réalisés par l'opérateur.

10. Procédé de la revendication 1, dans lequel la réception du jeu de zones comprend la réception d'un ou de plusieurs frappes au clavier.

11. Procédé de la revendication 1, dans lequel le procédé comprend également la réception d'une limite associée à une manipulation limitée sur la surface provenant de l'opérateur.

12. Procédé de la revendication 1, dans lequel la réception du jeu de zones comprend la réception d'un jeu d'emplacements et l'association d'une zone avec chaque emplacement.

13. Procédé de la revendication 12, dans lequel le procédé comprend également la réception d'une taille des zones pour l'association avec chaque emplacement dans le jeu d'emplacements.

14. Système pour une manipulation de surface dans un modèle de prothèse dentaire, comprenant :
un ou plusieurs processeurs informatiques configurés pour :
fournir une interface informatique pour modifier une surface d'un modèle d'une prothèse dentaire ;
recevoir, à travers l'interface informatique, un jeu de zones dans lesquelles l'opérateur voudrait réaliser une manipulation limitée de la surface du modèle ; et
manipuler des parties de la surface jusqu'à une limite associée à la manipulation limitée de la surface basée sur le jeu de zones, indépendamment du chevauchement dans les zones provenant de l'opérateur ;

15. Système de la revendication 14,
dans lequel la réception du jeu de zones comprend la réception d'une première zone dans le jeu de zones est d'une seconde zone dans le jeu de zones, dans lequel la première zone et la seconde zone se chevauchent au niveau d'une zone de chevauchement donnée ; et
dans lequel les parties de manipulation de la surface comprennent la manipulation d'une partie de la surface associée à la zone de chevauchement donnée seulement jusqu'à une limite associée à la manipulation limitée.

16. Système de la revendication 14, dans lequel une bande limite est associée aux bords des zones dans le jeu de zones et dans lequel les parties de manipulation de la surface comprennent des parties de manipulation de la surface inférieures à la limite associée à la manipulation limitée au niveau de la bande limite.

17. Système de la revendication 14, dans lequel la réception du jeu de zones comprend la réception des zones sur la surface du modèle.

18. Support de stockage lisible par ordinateur comprenant des instructions exécutables par un ordinateur pour réaliser un procédé de manipulation de surface dans un modèle de prothèse dentaire, le procédé comprenant :
L'utilisation d'une interface informatique pour modifier une surface de modèle d'une prothèse dentaire ;
la réception à travers l'interface informatique d'un jeu de zones dans lesquelles l'opérateur voudrait réaliser une manipulation limitée de la surface du modèle ; et
la manipulation des parties de la surface jusqu'à une limite associée à la manipulation limitée de la surface basée sur le jeu de zones, indépendamment du chevauchement dans les zones provenant de l'opérateur.

19. Support de stockage lisible par ordinateur de la revendication 18,
dans lequel la réception du jeu de zones comprend la réception d'une première zone dans le jeu de zones est d'une seconde zone dans le jeu de zones, dans lequel la première zone et la seconde zone se chevauchent au niveau d'une zone de chevauchement donnée ; et
dans lequel les parties de manipulation de la surface comprennent la manipulation d'une partie de la surface associée à la zone de chevauchement donnée seulement jusqu'à une limite associée à la manipulation limitée.

20. Support de stockage lisible par ordinateur de la revendication 18, dans lequel une bande limite est associée aux bords des zones dans le jeu de zones et dans lequel les parties de manipulation de la surface comprennent des parties de manipulation de la surface inférieures à la limite associée à la manipulation limitée au niveau de la bande limite.

21. Support de stockage lisible par ordinateur de la revendication 18, dans lequel la réception du jeu de zones comprend la réception des zones sur la surface du modèle.

22. Procédé de la revendication 1, dans lequel une couche uniforme doit être ajoutée ou retranchée dudit jeu de zones, par lequel lesdits jeux de zones peuvent se chevaucher sans modifier l'uniformité de la couche qui est ajoutée ou retranchée.

23. Système de la revendication 14, dans lequel une couche uniforme doit être ajoutée ou retranchée dudit jeu de zones, par lequel lesdits jeux de zones peuvent se chevaucher sans modifier l'uniformité de la couche qui est ajoutée ou retranchée.

24. Support de stockage lisible par ordinateur de la revendication 18, dans lequel une couche uniforme doit être ajoutée ou retranchée dudit jeu de zones, par lequel lesdits jeux de zones peuvent se chevaucher sans modifier l'uniformité de la couche qui est ajoutée ou retranchée.
